# EUROPEAN PATENT APPLICATION

(11) **EP 4 684 649 A1**
(43) Date of publication of application: **28.01.2026**
(21) Application number: 25178947.5
(22) Date of filing: 27.05.2025
(51) Int. Cl.: A23K 10/37, A23K 50/90

(54) **METHOD FOR THE TRANSFORMATION OF OLIVE POMACE AND TRANSFORMED OLIVE POMACE OBTAINED BY SAID METHOD**

(30) Priority: 26.07.2024 ES 202430635 U
(71) Applicant: Biotecnologia Andaluza 2023 S.L., 28009 Madrid (ES)
(72) Inventor: Brown, Benjamin, Sliema (MT); Fernández Arteaga, Alejandro, Granada (ES); Almécija Rodriguez, Maria del Carmen, Granada (ES); Fernández Bayo, Jesús Dionisio, Granada (ES)
(74) Representative: Ibarra Garcia, Isabel

(57) **Abstract**

The invention relates to a method for the transformation of olive pomace, sourced from the oil industry, by means of a mechanical dehydration treatment for separating the solid phase and a chemical treatment by mixing said phase with an ammonia solution to obtain a transformed olive pomace. The transformed olive pomace obtained has reducing sugars and a balanced C/N ratio, being a nutritional contribution source. It should be noted that the main application of the pomace obtained is for use thereof in feeding insects, as feed, when they are placed in contact preferably with black soldier fly larvae.

## Description

### OBJECT OF THE INVENTION

The present invention describes a method for the transformation of olive pomace, which is a by-product sourced from the agri-food oil industry and is transformed for use thereof in insect farming.

Advantageously, the present method allows utilizing a by-product from the oil industry and enables obtaining olive pomace that can be digested by fly larvae, specifically black soldier fly larvae. In that sense, by feeding black soldier fly larvae with digestible olive pomace obtained by the method of the present invention, an increased black soldier fly larva production efficiency is obtained, since the digestible olive pomace is a source of protein.

The process for the transformation of olive pomace includes physical treatment steps of dehydration and a chemical treatment by placing said pomace in contact with an ammonia solution, allowing a transformed olive pomace of interest to be obtained.

Another object of the present patent relates to the transformed digestible olive pomace itself obtained by means of said method, and to the use thereof as food for insects or as feed for fly larvae, preferably black soldier fly larvae.

### BACKGROUND OF THE INVENTION

Pomace, also known as wet fatty marc, is a production by-product or waste derived from virgin olive oil production activity.

The management and valorization of by-products from the oil industry, particularly pomace, have been the object of study in many prior research projects. Traditionally, techniques such as compositing and anaerobic digestion have been used to treat this waste, as discussed in an article by López et al. (2020) published in the Journal of Waste Management*.* However, these techniques do not produce products of such high economic value as an insect biomass as a source of nutritional proteins in animal feed and organic amendments to improve soil health.

Adding to this basic knowledge, studies such as the one conducted by Diener et al. (2017), published in Reviews in Environmental Science and Biotechnology*,* demonstrate the efficiency of black soldier fly larvae in converting food waste into protein-rich biomass.

Several studies (Amrul et al., Kabir Ahmad I, Ahmad Basri NE, Suja F, Abdul Jalil NA, Azman NA. A Review of Organic Waste Treatment Using Black Soldier Fly (Hermetia illucens). Sustainability. 2022; 14(8):4565. https://doi.org/10.3390/su14084565) investigate the abilities of these larvae to transform a variety of agricultural waste, suggesting that the use thereof may be extended to by-products from the oil industry. These studies have led to the development of systems and methods that use black soldier fly larvae to efficiently process organic waste and produce valuable by-products as biofertilizers and animal feed. These contributions show an increasing interest in the use of biological methods for managing agricultural waste and transforming same into useful resources.

However, it has been found that the concentration of toxic compounds, such as polyphenols, and poorly digestible compounds, such as lignin, in pomace can inhibit larval growth and development, limiting the effectiveness of these biological processes.

This challenge was documented by Ramzy et al. (Conversion Efficiency of Lignin-Rich Olive Pomace to Produce Nutrient-Rich Insect Biomass by Black Soldier Fly Larvae, Hermetia illucens. Waste Biomass Value, 13, 893-903 published in 2022) and Ameixa et al. (Bioconversion of olive oil pomace by black soldier fly increases eco-efficiency in solid waste stream reduction producing tailored value-added insect meals, published on 21 July 2023).

Both articles, as well as the article by Lalander et al. (Effects of feedstock on larval development and process efficiency in waste treatment with black soldier fly (Hermetia illucens). J. Clean. Prod., 208, 211-219, published in 2019), highlight the difficulties associated with the direct use of pomace due to its lignin-rich composition, lignin being a dietary component that cannot be digested by said larvae.

This emphasizes the need of an effective pretreatment to adapt this waste to bioconversion by means of black soldier fly larvae. The only way known up until now of using pomace as a substrate for black soldier fly larvae is its joint digestion with other materials such as wheat bran (Ramzy *et al.,* 2022) or chicken feed (Ameixa *et al.,* 2023). Attempts were made in earlier research to use ammonia treatment to degrade lignocellulose in agricultural waste and to increase its digestibility by black soldier flies, but this treatment was found not to be suitable for rearing black soldier flies (Peguero et al. Evaluation of ammonia pretreatment of four fibrous biowastes and its effect on black soldier fly larvae rearing performance. Waste Management, 160, 123-134, published in 2023).

Therefore, the proprietor of the present invention finds the need for proposing a treatment for olive pomace that maximizes its digestibility for use as insect feed.

### DESCRIPTION OF THE INVENTION

The method described below solves the problems set forth above as it allows obtaining transformed olive pomace having a sugar and nitrogen content suitable for digestion by insect larvae, specifically by black soldier fly larvae.

As indicated above, pomace sourced from the oil industry contains lignocellulose (a non-digestible fiber) and polyphenols (which are toxic). Therefore, if the pomace is placed in contact with larvae without being treated with the method of the present invention (i.e., without being transformed), said larvae will not grow.

In contrast, as shown below, the transformed olive pomace obtained by means of the present method is digestible when it is placed in contact with black soldier fly larvae.

The method for the transformation of olive pomace is made up of a mechanical treatment followed by a chemical treatment.

In that sense, the method of the invention therefore involves the following steps:
- mechanically dehydrating olive pomace by means of a decanter centrifuge, separating three phases: oil, solids, and a liquid fraction, wherein the solids have a moisture of between 60% and 30%,
- homogenously mixing the solids obtained in the preceding step with an ammonia solution at a concentration of between 0.1% and 1% at room temperature, obtaining transformed olive pomace. Optionally, the homogeneously mixing step is carried out by whipping/stirring for an interval of at least 2 minutes and up to at most 72 hours.

It should be noted that the olive pomace dehydration separation step (mechanical treatment) is crucial as it improves the effectiveness of the chemical treatment of the solid-ammonia mixture, obtaining a more manageable transformed olive pomace.

Likewise, there is a need to point out that, in the separation of the olive pomace in the decanter, centrifugal force causes instantaneous sedimentation of the solids on the wall of the decanter, while the oil, which is lighter, flows through the interior, and the liquid fraction (essentially water) remains in the center of the decanter. In this sense, it should be noted that phenolic compounds which, if present in the transformed olive pomace would negatively affect the growth or bioconversion of insect larvae, are also extracted in the liquid fraction.

Therefore, said mechanical treatment is vital not only for the reduction of moisture, but also for the efficiency in phase separation, facilitating the subsequent chemical treatment.

Advantageously, the transformed olive pomace obtained has reducing sugars with a content of between 10 and 20 mg/g of transformed pomace expressed on a dry basis and a C/N ratio of between 17 and 22 g/g (i.e., between 17:1 and 22:1), wherein the nitrogen is a nutritional contribution source.

Black soldier fly larvae (BSFL) adapt best to a C/N range below 20:1 (i.e., 20 g/g) and are less suitable for C/N ranges above 20:1 (Oonincx *et al.,* 2015; Rehman *et al.,* 2017).

The standard substrate for black soldier fly larvae is chicken feed, having a C/N ratio of 18:1 (i.e., 18 g/g).

Compared to other substrates with a higher C/N, such as plant substrates (C/N 24:1), it can be better digested by insect larvae (Lalander & Vinneras, 2019).

Therefore, untransformed olive pomace, with 70% moisture, has a C/N ratio of 44:1 (Alburquerque *et al.,* 2006), although this value drops when it is processed according to the method of the present invention, as described in detail in the preferred embodiment.

It should be noted that the present method contributes to the sustainable management of agricultural waste, reducing the environmental impact of olive pomace and promoting the production of a high added-value product in the form of insect larval biomass.

In that sense, and optionally, after the mixing step of the method described in detail above, black soldier fly larvae are added to the transformed olive pomace, producing larval biomass and insect guano by means of bioconversion.

In this sense, another object of the invention relates to the use of the transformed olive pomace obtained according to the method described in detail above. Specifically, it is used as animal feed, preferably as animal feed for feeding insects, such as black soldier fly larvae.

As mentioned above, the transformed olive pomace obtained is used to feed black soldier fly larvae in environmental conditions and preferably for a period of 7 to 15 days. This process of bioconverting transformed olive pomace by said larvae not only allows the production of proteins, but also insect guano (also known as frass), a very valuable organic fertilizer.

In other words, an additional product, which is the fertilizer from insect excrements or guano, a high-quality organic compost, and a soil conditioner, which supports regenerative and sustainable agriculture, is obtained during the bioconversion.

This fertilizer is derived from waste excreted by black soldier fly larvae when they feed on transformed olive pomace, offering an effective solution for improving soil health and promoting a more sustainable agricultural cycle.

The innovative effort set forth in the present invention lies in obtaining transformed olive pomace that can be digested by black soldier fly larvae and that therefore allows its bioconversion.

The transformed olive pomace of the present invention therefore provides particular properties making it very interesting from a commercial perspective.

### DESCRIPTION OF THE FIGURES

To broaden the following description and to facilitate the understanding of the features of the invention, an example of the embodiment of the invention is included. This example is presented as an integral part of the description by means of an illustrative figure which depicts, by way of example and in a non-limiting manner, the following:

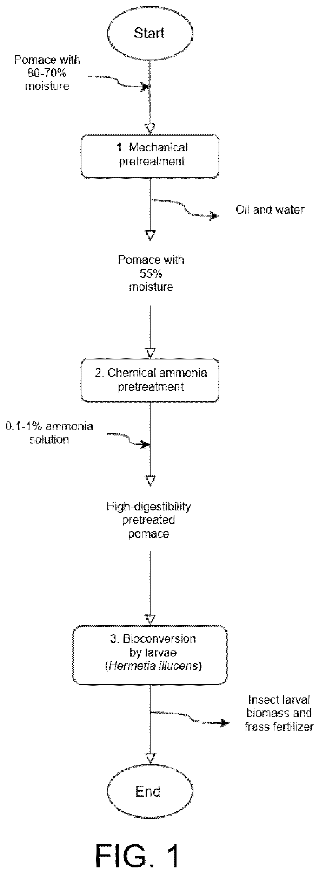

Figure 1 shows a schematic depiction of a preferred embodiment of the method of the present invention together with the step of rearing and feeding black soldier fly larvae for the valorization of olive pomace.

### PREFERRED EMBODIMENT OF THE INVENTION

A preferred embodiment of the method of the invention for obtaining transformed olive pomace and for the bioconversion thereof with larvae is described in detail below according to the details in Figure 1, which consists of the following three steps:
Step 1: Mechanical pretreatment:
   This initial step uses a decanter centrifuge to efficiently reduce the moisture content of the pomace from 80-70% to 55%, facilitating the separation of oil, solids, and a liquid fraction (mainly water). This step is crucial as it improves the effectiveness of the subsequent chemical treatment by preparing a more manageable substrate.
      Input: Pomace with 80-70% moisture.
      Process: Separation by means of a decanter centrifuge.
      Moisture reduction: from 80-70% to 55%.
      Discarded phases: Oil and liquid fraction.
      Output: Pomace (solids) with 55% moisture prepared for the subsequent step.
   From the tested sample of the present invention, the C/N ratio for the pomace with 70% moisture has an average value of 39.73 g/g, and the C/N ratio measured for the pomace after dehydration, with a moisture value of 55%, corresponds to 24.73 g/g.
Step 2: Ammonia chemical pretreatment:
   After mechanical dehydration, the solid with 55% moisture (pomace) is subjected to a rigorous chemical treatment using a 0.1-1% ammonia solution.

This step is carried out under controlled conditions (room temperature and stirring at 50-200 rpm for up to 72 hours) to decompose lignocellulosic components, significantly improving substrate digestibility.
Input: Solids with 55% moisture (pomace) obtained in the preceding step and 0.1-1% ammonia solution.
Process: Mixing of the mentioned pomace with a 0.1-1% ammonia solution
Conditions: Substrate homogenization at a temperature of 5-35°C for 2 minutes up to 72 hours.
Component decomposition: Improvement in the digestibility of the substrate for feeding black soldier fly larvae.
Output: Transformed olive pomace, ready for bioconversion.

Before proceeding to step 3, characterization of the transformed olive pomace is performed in order to determine the content of reducing sugars and their C/N ratio.

In this sense, measurement performed to determine the reducing sugar content is performed according to the DNS method established by G. L. Miller (Use of Dinitrosalicylic Acid Reagent for Determination of Reducing Sugar (1959) Analytical Chemistry Vol 31/Issue 3), and a reducing sugar value of 10-20 mg/g expressed on a dry basis is obtained for the transformed olive pomace. This value is in stark contrast to the value measured for the untransformed olive pomace which corresponds to 0.3-1 mg/g expressed on a dry basis.

Therefore, the greater presence of reducing sugars in the transformed olive pomace shows that, when compared to untreated pomace, the transformed pomace corresponds to a more digestible product.

Moreover, the C/N ratio is measured using THERMO SCIENTIFIC Flash 2000 model elemental analyzer, obtaining a C/N ratio of 19.4 g/g. This value is in stark contrast to the C/N value measured for olive pomace that is dehydrated but not chemically treated, which corresponds to 24.73 g/g.

### Step 3: Bioconversion by larvae:

The final step involves feeding black soldier fly larvae with the transformed olive pomace obtained in the preceding step.

For a period of 7-15 days, the mentioned larvae consume the substrate, converting it into a high-quality insect biomass and producing insect guano, which serves as an excellent organic fertilizer.
Input: Transformed olive pomace obtained in the preceding step.
Process: Feeding the mentioned pomace to black soldier fly larvae.
Conditions: Controlled temperature and moisture at 32-28°C and 70-85%.
Time period: 7-15 days.
Output: Production of larval biomass and insect guano.

As described in detail above, experiments are performed to quantify the potential of the transformed olive pomace for the bioconversion of fly larvae with which it is placed in contact.

In particular, the experiments performed by comparing the different treatments with the optimum feed for black soldier fly larvae (chicken feed adjusted to 60-65% moisture) showed following:
- Transformed olive pomace according to the method of the present invention (which has been treated with mechanical separation and subsequent treatment with an ammonia solution) increased larval biomass by 20% compared with the control diet of chicken feed,
- Untreated olive pomace showed an efficiency reduced by 315% below the control.

Therefore, the combination of a mechanical treatment and a chemical treatment of olive pomace is unique and has not been disclosed up until now for rearing black soldier flies or any other type of biological process. This innovation significantly improves (3.5-fold) the larva feeding conversion rate compared to pomace that has not been treated, so it increases the production of larval biomass in a very significant manner.

Furthermore, the method of the present invention allows a low use of chemical reagents and reduces the need for very expensive processes, such as sterilization or joint digestion, reducing operational costs, resilience, and improving process sustainability.

The method described in detail not only demonstrates a novel and effective approach for the treatment of olive pomace, but also presents an economical and environmentally sustainable solution for the agricultural waste recovery industry, by converting by-products of low economic value and which are hard to manage from an environmental perspective into various valuable and sustainable resources. The experimental results validate the effectiveness of the invention, providing an improved yield that supports its practical and commercial application.

## Claims

1. A method for the transformation of olive pomace, comprising the following phases:
- mechanically dehydrating olive pomace by means of a decanter centrifuge, separating three phases: oil, solids, and a liquid fraction, wherein the solids have a moisture of between 60% and 30%,
- homogenously mixing the solids obtained in the preceding step with an ammonia solution at a concentration of between 0.1% and 1% at room temperature, obtaining transformed olive pomace,
wherein the transformed olive pomace obtained has reducing sugars with a content of between 10 and 20 mg/g of transformed pomace expressed on a dry basis and a C/N ratio of between 17 and 22 g/g, which is a nutritional contribution source.

2. The method for the transformation of olive pomace according to claim 1, **characterized in that** the homogeneously mixing step is carried out by whipping/stirring for an interval of at least 2 minutes and up to at most 72 hours.

3. The method for the transformation of olive pomace according to claim 1 or 2, **characterized in that** after the mixing step, black soldier fly larvae are added to the transformed olive pomace, producing larval biomass and insect guano by means of bioconversion.

4. A transformed olive pomace obtained using the method according to any of the preceding claims, **characterized in that** it has reducing sugars with a content of between 10 and 20 mg/g of transformed pomace expressed on a dry basis and a C/N ratio of between 17 and 22 g/g.

5. Use of the transformed olive pomace according to claim 4 for feeding insects.

6. Use of the transformed olive pomace according to claim 5, wherein the animals are black soldier fly larvae.
